# EUROPÄISCHE PATENTSCHRIFT

(11) **EP 3 252 284 B1**
(45) Veröffentlichungstag und Bekanntmachung des Hinweises auf die Patenterteilung: **07.04.2021**
(21) Anmeldenummer: 17171642.6
(22) Anmeldetag: 18.05.2017
(51) Int. Cl.: F02B 37/00

(54) **BRENNKRAFTMASCHINE MIT ZWEI ABGASTURBOLADERN**
COMBUSTION ENGINE COMPRISING TWO EXHAUST GAS TURBOCHARGERS
MOTEUR À COMBUSTION INTERNE COMPRENANT DEUX TURBOCOMPRESSEURS

(30) Priorität: 01.06.2016 DE 102016209603
(43) Veröffentlichungstag der Anmeldung: 06.12.2017
(73) Patentinhaber: BMTS Technology GmbH & Co. KG, 70376 Stuttgart (DE)
(72) Erfinder: STRIEDELMEYER, Thomas, 70378 Stuttgart (DE)
(74) Vertreter: BRP Renaud & Partner mbB Rechtsanwälte Patentanwälte Steuerberater

(56) Entgegenhaltungen:
- EP-A2- 2 071 154
- DE-A1-102013 207 473
- DE-T2- 3 785 422
- US-A1- 2013 259 661
- US-A1- 2014 127 002

## Beschreibung

Die Erfindung betrifft eine Brennkraftmaschine mit zwei Abgasturboladern.

Moderne Brennkraftmaschinen sind zur Leistungssteigerung und zur Reduzierung von Schadstoffemissionen mit einem Abgasturbolader ausgestattet. Aus dem Stand der Technik ist es zur Verbesserung des Wirkungsgrads der mittlerweile bekannt, eine Brennkraftmaschine nicht nur mit einem einzigen solchen Abgasturbolader auszustatten, sondern sogar zwei Abgasturbolader quasi "in Reihe" zu schalten.

Als problematisch erweist sich dabei oftmals ein unerwünschter Wärmestrom in dem der Brennkraftmaschine unmittelbar vor- bzw. nachgeschaltetem Abgasturbolader, dem sogenannten Hochdruck-Abgasturbolader: Von dessen Lagergehäuse, in welchem die Welle des Abgasturboladers einschließlich Turbinen- und Verdichterrad drehbar gelagert ist und welches typischerweise Wärme aus dem von heißen Abgasen durchströmten Turbinengehäuse aufnimmt, tritt typischerweise ein nicht unerheblicher Wärmestrom in das Verdichtergehäuse über, wodurch der Wirkungsgrad des Abgasturboladers gemindert wird.

Vor diesem Hintergrund behandelt die DE10 2007 023 142 A1 einen Verdichter eines Abgasturboladers. In der Rückwand eines Verdichterrad-Gehäuses ist ein vertikaler Kühlkanal integriert, durch welchen ein Wärmeeintrag von der Turbine des Abgasturboladers in das Verdichtergehäuse gemindert werden soll.

Die US 2012/057975 A1 beschreibt einen Abgasturbolader, bei welchem an einer Rückwand des Verdichters durch Anliegen zweier Bauteile ein Luftspalt ausgebildet wird.

Die US 3,565,497 behandelt einen Abgasturbolader, bei welchem von einem Hitzeschild und dem Lagergehäuse ein Luftspalt begrenzt wird.

Die US 4,198,192 beschreibt einen Abgasturbolader, bei welchem zwischen zwei Platten eine Kammer gebildet ist, mittels welcher die Welle des Abgasturboladers und eine Lagereinrichtung zur Lagerung der Welle am Gehäuse gegen unerwünschten Wärmeeintrag aus der Turbine geschützt werden soll.

Die EP 2 071 154 A2 zeigt einen Abgasturbolader, bei dem das Verdichtergehäuse eine Rückwand aufweist, die aus einem formstabilen und wärmeisolierenden Material hergestellt ist.

Es ist eine Aufgabe der vorliegenden Erfindung, eine Brennkraftmaschine mit zwei Abgasturboladern in Form eines Hochdruck-Abgasturboladers und eines Niederdruck-Abgasturboladers zu schaffen, bei welcher das Verdichtergehäuse des Hochdruck-Abgasturboladers mit einem verbesserten Schutz gegen unerwünschten Wärmeeintrag aus dem Lagergehäuse versehen ist.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, zwischen dem Verdichtergehäuse und dem Lagergehäuse des Hochdruck-Abgasturboladers eine thermische Isolation vorzusehen. Besagte thermische Isolation besitzt dabei die Eigenschaft, dass sie gegenüber einem herkömmlichen Abgasturbolader ohne solche thermische Isolation die thermische Kopplung zwischen dem Verdichtergehäuse und dem Lagergehäuse zumindest reduziert. Dies führt zu einer Erhöhung des Wirkungsgrads des Verdichters und somit des Hochdruck-Abgasturboladers.

Im Idealfall wird das Verdichtergehäuse sogar nahezu vollständig thermisch vom Lagergehäuse entkoppelt, so dass der vom Lagergehäuse kommende Wärmeeintrag in das Verdichtergehäuse nahezu vollständig - gegenüber einem Abgasturbolader ohne eine solche thermische Isolation jedoch zumindest erheblich - reduziert wird. Unter dem Begriff "thermische Isolation" ist vorliegend also auch eine Einrichtung ausdrücklich umfasst, welche die Übertragung von Wärme vom Lagergehäuse in das Verdichtergehäuse im Sinne einer thermischen Drossel - dem Fachmann auch als "Wärmedrossel" bekannt - reduziert.

Eine erfindungsgemäße Brennkraftmaschine mit mehreren Zylindern besitzt eine Frischluftseite und eine Abgasseite. Über die Frischluftseite wird Frischluft, welches in die Zylinder rückzuführendes Abgas enthält, in die Zylinder eingebracht. Hierzu weist die Brennkraftmaschine eine mit der Frischluftseite kommunizierende Frischluftleitung auf. Ferner weist die Brennkraftmaschine eine mit der Abgasseite kommunizierende Abgasleitung auf. Weiterhin umfasst die Brennkraftmaschine einen ersten Abgasturbolader, der ein erstes Turbinenrad und ein über eine erste Welle drehfest mit diesem verbundenes erstes Verdichterrad aufweist. Dabei sind das erste Turbinenrad in der Abgasleitung und das erste Verdichterrad in der Frischluftleitung angeordnet. Weiterhin umfasst die Brennkraftmaschine einen zweiten Abgasturbolader, der ein zweites Turbinenrad und ein über eine zweite Welle drehfest mit diesem verbundenes zweites Verdichterrad aufweist. Das zweite Turbinenrad des zweiten Abgasturboladers ist in der Abgasleitung zwischen der Abgasseite und dem ersten Turbinenrad des ersten Abgasturboladers angeordnet. Das zweite Verdichterrad des zweiten Abgasturboladers ist in der Frischluftleitung zwischen der Frischluftseite und dem ersten Verdichterrad des ersten Abgasturboladers angeordnet. Das zweite Verdichterrad ist in einem Gehäuseinnenraum angeordnet, der von einem Verdichtergehäuse des zweiten Abgasturboladers begrenzt ist. Die zweite Welle ist drehbar an einem Lagergehäuse des zweiten Abgasturboladers gelagert. Bei der erfindungsgemäßen Brennkraftmaschine übernimmt der erste Abgasturbolader die Funktion eines Niederdruck-Abgas-turboladers und der zweite Abgasturbolader die Funktion eines Hochdruck-Abgasturboladers. Durch das Verdichtergehäuse, das zweite Verdichterrad und das Lagergehäuse des zweiten Abgasturboladers ist ein Strömungskanal für die durch die Frischluftleitung geführte Frischluft begrenzt. Erfindungsgemäß ist zwischen dem Lagergehäuse und dem Verdichtergehäuse des zweiten Abgasturboladers eine thermische Isolation zum Verringern eines Wärmeübergangs vom Lagergehäuse zum Verdichtergehäuse vorgesehen, wobei die thermische Isolation auf einer dem Strömungskanal zugewandten Seite des Lagergehäuses ausgebildet ist.

Bei einer bevorzugten Ausführungsform ist die thermische Isolation derart ausgebildet, dass der von ihr bereitgestellte thermische Isolationsgrad variierbar ist.

Erfindungsgemäß ist im ersten Abgasturbolader zwischen dessen Verdichtergehäuse und dessen Lagergehäuse keine thermische Isolation vorgesehen. Da der erste Abgasturbolader als Niederdruck-Abgas-turbolader wirkt, ist die thermische Belastung des Verdichters in diesem - insbesondere gegenüber dem als Hochdruck-Abgasturbolader wirkenden zweiten Abgasturbolader - relativ gering. Aus Kostengründen kann bei dieser Variante daher die erfindungswesentliche thermische Isolation im ersten Abgasturbolader entfallen.

Bei einer vorteilhaften Weiterbildung der Erfindung ist auf einer dem Strömungskanal zugewandten Seite des Lagergehäuses ein Zwischenbauteil angeordnet, in welchem ein die thermische Isolation ausbildender Hohlraum vorhanden ist. Mittels eines solchen Hohlraums wird der thermische Kontakt zwischen dem Verdichtergehäuse und dem Lagergehäuse erheblich verringert, so dass dieser als thermische Isolation oder zumindest als thermische Drossel wirkt.

Bevorzugt ist das Zwischenbauteil ringartig ausgebildet. Vorzugsweise besteht das Zwischenbauteil aus einem Kunststoff, welcher eine niedrige Wärmeleitfähigkeit aufweist und sich daher gut als Wärmedrossel oder als thermischer Isolator eignet.

Bei einer vorteilhaften Weiterbildung weist das Zwischenbauteil einen Durchbruch zum Befüllen des Hohlraums mit einem Fluid auf. Ein solches Fluid kann eine Flüssigkeit oder ein Gas, insbesondere Luft, sein. Je nach Wärmeleitfähigkeit des Fluids kann somit eine vorbestimmte thermische Isolationswirkung erzielt werden. Bei dieser Variante ist besagter Hohlraum in einem im zweiten Abgasturbolader montierten Zustand vom Verdichtergehäuse verschlossen. Auf diese Weise ist sichergestellt, dass das Fluid im Betrieb des zweiten Abgasturboladers nicht aus dem Hohlraum entweichen kann.

Eine besonders einfache, gleichwohl zuverlässige mechanische Fixierung des Zwischenbauteils am Lagergehäuse ermöglicht eine bevorzugte Ausführungsform, bei welcher das Zwischenbauteil mechanisch zwischen dem Lagergehäuse und dem Verdichtergehäuse verspannt ist.

Besonders einfach herzustellen ist eine weitere bevorzugte Ausführungsform, bei welcher das Zwischenbauteil mittels eines Gussverfahrens hergestellt ist, also ein Gussteil ist. Besonders bevorzugt ist das Zwischenbauteil ein Aluminium-Gussteil, da dieses ein besonders geringes Eigengewicht besitzt.

Bei einer anderen bevorzugten Ausführungsform ist auf einer dem Strömungskanal zugewandten Seite des Lagergehäuses ein Lagergehäusedeckel angeordnet. Im Lagergehäusedeckel ist zur Ausbildung der thermischen Isolation eine Vertiefung vorgesehen. Bei dieser Variante ist die Vertiefung in einem am Lagergehäuse angeordneten Zustand des Lagergehäusedeckels vom Lagergehäuse verschlossen.

Eine besonders einfache, gleichwohl zuverlässige mechanische Fixierung des Lagergehäusedeckels am Lagergehäuse ermöglicht eine vorteilhafte Weiterbildung, bei welcher der Lagergehäusedeckel zwischen dem Verdichtergehäuse und dem Lagergehäuse verspannt ist.

Mit besonders geringen Fertigungskosten geht indes eine weitere bevorzugte Ausführungsform einher, bei welcher der Lagergehäusedeckel als tiefgezogenes Blechformteil oder als mittels Feinschneidens und Prägens gefertigtes Blechformteil ausgebildet ist.

Bei einer dazu alternativen Variante, die ebenfalls mit geringen Herstellungskosten verbunden ist, ist der Lagergehäusedeckel als Gussteil, vorzugsweise als Kunststoff-Spritzgussteil, ausgebildet.

Bei einer anderen bevorzugten Ausführungsform ist auf einer dem Strömungskanal zugewandten Seite des Lagergehäuses eine die thermische Isolation ausbildende Ausnehmung vorhanden. Die Ausnehmung ist bei dieser Ausführungsform von einem Lagergehäusedeckel fluiddicht verschlossen, so dass die Ausnehmung mit einem Fluid, insbesondere mit einem Gas oder einer Flüssigkeit mit geringer Wärmeleitfähigkeit befüllt werden kann.

Besonders zweckmäßig kann der Lagergehäusedeckel, vorzugsweise aus einem Kunststoff, mittels einer Schraubverbindung lösbar mit dem Lagergehäuse verbunden sein. Eine solche Schraubverbindung erlaubt eine einfache Fixierung des Lagergehäusedeckels am Lagergehäuse. Ein Lagergehäusedeckel aus Kunststoff ist besonders einfach und somit kostengünstig herzustellen.

Konstruktiv besonders einfach aufgebaut ist eine andere bevorzugte Ausführungsform, bei der die thermische Isolierung bildender Hohlraum direkt im Lagergehäuse ausgebildet ist, so dass die Bereitstellung eines Zwischenbauteils oder eines Lagergehäusedeckels entfallen kann. Ein Lagergehäuse mit einem solchen Hohlraum kann beispielsweise mittels eines Sandgussverfahrens hergestellt werden.

Besonders bevorzugt ist besagter Hohlraum mit einem Gas, insbesondere mit Luft, befüllt. Alternativ dazu kann in dem Hohlraum ein Vakuum ausgebildet sein. Mittels eines Vakuums kann die Konvektion von Wärme vom Lagergehäuse zum Verdichtergehäuse reduziert werden.

Bei einer vorteilhaften Weiterbildung ist im Lagergehäuse ein Durchbruch ausgebildet, mittels welchem der Hohlraum von außen mit einem Fluid, vorzugsweise mit einem Gas oder mit einer Flüssigkeit, höchst vorzugsweise mit Luft, befüllbar oder befüllt ist. Je nach Wärmeleitfähigkeit des Gases kann die Wärmeleitfähigkeit eingestellt werden.

Bei einer weiteren bevorzugten Ausführungsform ist der Hohlraum über den Durchbruch mit einem Fluidreservoir verbindbar oder verbunden. In oder an einem solchen Fluidreservoir kann eine als eine Druckkolben ausgebildete Druckbeaufschlagungseinrichtung vorhanden sein, mittels welcher das Fluid, insbesondere das Gas, aus dem Fluidreservoir in den Hohlraum einbringbar ist. Auf diese Weise kann eine bestimmte Menge an Fluid in den Hohlraum eingebracht und somit der mittels der thermischen Isolation erzeugbare thermische Isolationsgrad variiert werden. Mit Hilfe einer geeigneten, mit dem Druckkolben zusammenwirkenden Steuerungseinrichtung kann der gewünschte thermische Isolationsgrad der thermischen Isolierung sogar gezielt eingestellt werden.

Bei einer vorteilhaften Weiterbildung ist in einem Turbinengehäuse des zweiten Abgasturboladers ein weiterer Hohlraum ausgebildet, und zwar in analoger Weise zu dem vorangehend im Zusammenhang mit dem Lagergehäuse erläuterten Hohlraum. Auf diese Weise kann auch der Wärmeeintrag von Wärme aus dem Turbinengehäuse in das Lagergehäuse minimiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch:
- Fig. 1-7: verschiedene Beispiele für die technische Realisierung der erfindungswesentlichen thermischen Isolation im zweiten Abgasturbolader,
- Fig. 8: den prinzipielle Aufbau der Brennkraftmaschine mit zwei Abgasturboladern,

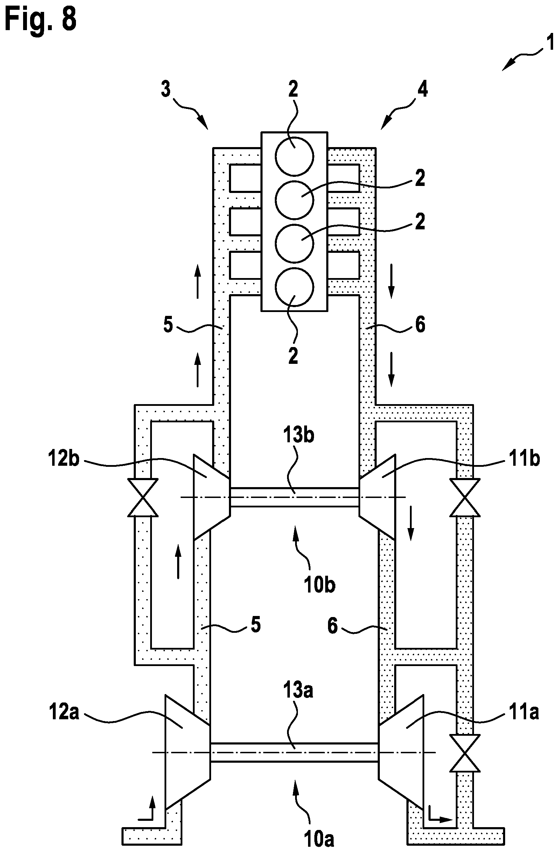

In den Figuren werden verschiedene Beispiele einer erfindungsgemäßen Brennkraftmaschine 1 erläutert. Zunächst soll jedoch anhand der Figur 8 der prinzipielle Aufbau der Brennkraftmaschine 1 mit zwei Abgasturboladern 10a, 10b erläutert werden.

Entsprechend Figur 8 umfasst die Brennkraftmaschine 1 mehrere Zylinder 2 und besitzt eine Frischluftseite 3 sowie eine Abgasseite 4. Mit der Frischluftseite 3 kommuniziert eine Frischluftleitung 5, über welche Frischluft sowie aus den Zylindern 2 ausgestoßenes und in die Zylinder rückzuführendes Abgas in die Zylinder 2 eingeleitet werden kann. Mit der Abgasseite 4 kommuniziert eine Abgasleitung 6, über welche das in den Zylindern 2 erzeugte Abgas aus diesen abgeführt werden kann.

Weiterhin umfasst die Brennkraftmaschine 1 einen ersten Abgasturbolader 10a, der ein erstes Turbinenrad 11a und ein über eine erste Welle 13a drehfest mit diesem verbundenes erstes Verdichterrad 12a aufweist. Das erste Turbinenrad 11a ist in der Abgasleitung 6 angeordnet. Das erste Verdichterrad 12a ist in der Frischluftleitung 5 angeordnet.

Ein weiterer, zweiter Abgasturbolader 10b umfasst ein zweites Turbinenrad 11b und ein über eine zweite Welle 13b drehfest mit diesem verbundenes, zweites Verdichterrad 12b. Das zweite Turbinenrad ist in der Abgasleitung 6 zwischen der Abgasseite 4 und dem ersten Turbinenrad 11a des ersten Abgasturboladers 10 angeordnet. Das zweite Verdichterrad 12b ist in der Frischluftleitung 5 zwischen der Frischluftseite 3 und dem ersten Verdichterrad 12a angeordnet. Der erste Abgasturbolader 10a wirkt somit als Niederdruckdruck-Abgasturbolader, und der zweite Abgasturbolader 10b wirkt als Hochdruckdruck-Abgasturbolader.

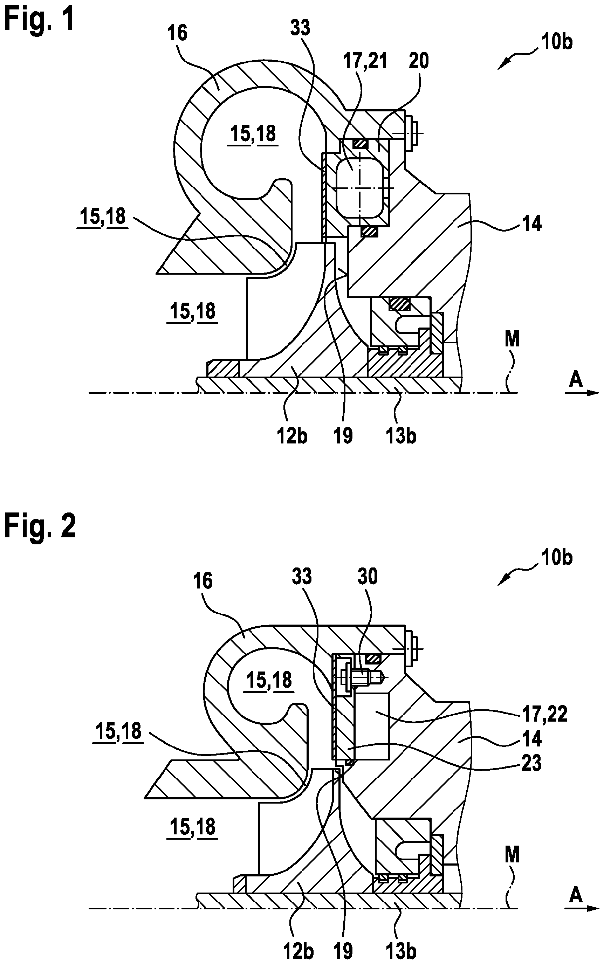

Die Figur 1 zeigt ein erstes Beispiel des zweiten Abgasturboladers 10b der Brennkraftmaschine 1, also des Hochdruck-Abgasturboladers, in einer Detaildarstellung. Figur 1 belegt anschaulich, dass die zweite Welle 13b um ihre Mittellängsachse M drehbar in einem Lagergehäuse 14 des zweiten Abgasturboladers 10b gelagert ist. Durch die Mittellängsachse M ist eine axiale Richtung A des zweiten Abgasturboladers 10b definiert. Das drehfest mit der zweiten Welle 13b verbundene, zweite Verdichterrad 12b ist in einem Gehäuseinnenraum 15 angeordnet, der von einem Verdichtergehäuse 16 des zweiten Abgasturboladers 10b begrenzt ist.

Wie Figur 1 weiter erkennen lässt, ist zwischen dem Lagergehäuse 14 und dem Verdichtergehäuse 16 des zweiten Abgasturboladers 10b eine thermische Isolation 17 zum Minimieren eines Wärmeübergangs vom Lagergehäuse zum Verdichtergehäuse 16 vorgesehen. Durch das Verdichtergehäuse 16, das zweite Verdichterrad 12b und das Lagergehäuse 14 wird ein Strömungskanal 18 für die durch die Frischluftleitung 5 strömende Frischluft teilweise begrenzt.

Zur Ausbildung der thermischen Isolation 17 ist im Beispiel der Figur 1 auf einer dem Strömungskanal 18 zugewandten Seite 19 des Lagergehäuses 14 ein ringartig ausgebildetes Zwischenbauteil 20 aus einem Metall oder, vorzugsweise, weil eine geringere Wärmeleitfähigkeit aufweisend, aus einem Kunststoff angeordnet. In dem Zwischenbauteil 20 ist ein Hohlraum 21 vorhanden, welcher die thermische Isolation 17 ausbildet. Der Hohlraum 21 kann ebenso wie das Zwischenbauteil 20 die Geometrie eines Hohlzylinders besitzen. Bevorzugt ist das Zwischenbauteil 20 zwischen dem Lagergehäuse 14 und dem Verdichtergehäuse 16 verspannt. Das Zwischenbauteil 20 kann ein Gussteil, insbesondere ein Aluminium-Gussteil, sein.

Die Figur 2 zeigt eine Variante des Beispiels der Figur 1. Im Beispiel der Figur 2 ist anstelle eines Zwischenbauteils 20 auf der dem Strömungskanal 18 zugewandten Seite 19 des Lagergehäuses 14 eine die thermische Isolation 17 ausbildende Ausnehmung 22 vorgesehen. Besagte Ausnehmung 22, welche die thermisehe Isolation 17 ausbildet, ist von einem Lagergehäusedeckel 23 verschlossen. Der Lagergehäusedeckel 23 besteht vorzugsweise aus einem Kunststoff oder einem anderen geeigneten Material geringer Wärmeleitfähigkeit und ist im Beispielszenario der Figur 2 mittels einer Schraubverbindung 30 lösbar mit dem Lagergehäuse 14 verbunden. Durch Lösen der Schraubverbindung 30 und anschließendes Entfernen des Lagergehäusedeckels 23 kann ein Fluid, insbesondere ein Gas wie etwa Luft, oder ein anderes geeignetes Fluid bzw. Gas mit einem geringen Wärmeleitkoeffizienten in die Ausnehmung 22 eingebracht werden. Anschließend kann der Lagergehäusedeckel 23 am Lagergehäuse 14 montiert und die Ausnehmung 22 auf diese Weise verschlossen werden.

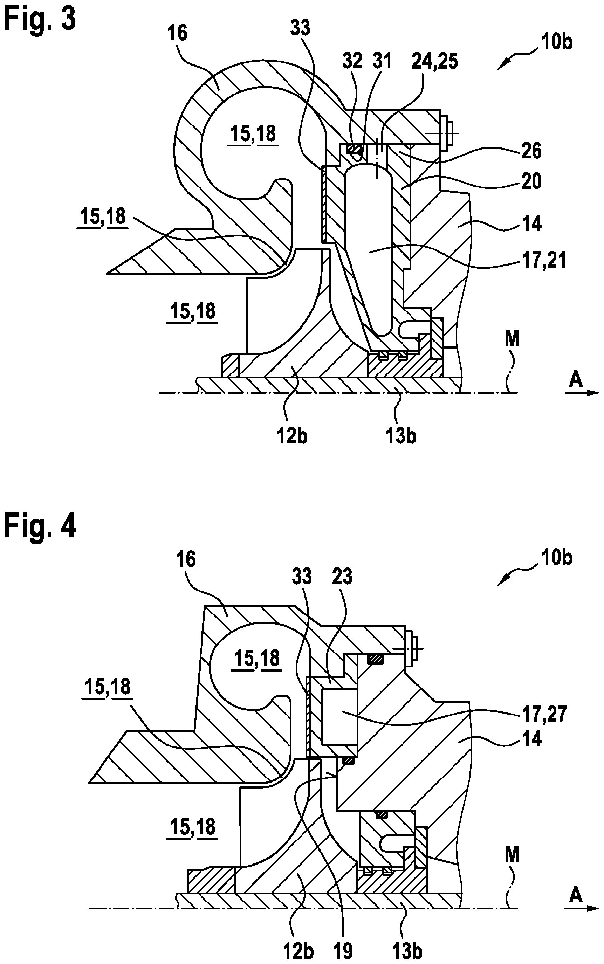

Die Figur 3 zeigt eine Weiterbildung des Beispiels gemäß Figur 1. Demnach kann das Zwischenbauteil 20 einen Durchbruch 24 zum Befüllen des Hohlraums 21 mit einem Fluid besitzen. Ein solches Fluid kann, zur Bereitstellung der gewünschten thermischen Isolation, eine Flüssigkeit oder ein Gas mit einer vorbestimmten, vorzugsweise geringen, Wärmeleitfähigkeit sein. Der Durchbruch 24 kann in einer radial äußeren Umfangswand 26 des hohlzylindrischen Zwischenbauteils 20 angeordnet sein. Der Durchbruch 24 kann als Durchgangsbohrung 25 realisiert sein.

In dem in Figur 3 gezeigten, im zweiten Abgasturbolader 10b montierten Zustand des Zwischenbauteils 20 ist der Durchbruch 24 bzw. die Durchgangsbohrung 25 vom Verdichtergehäuse 16 verschlossen. Zur Abdichtung des Hohlraums 21 gegen den Strömungskanal 18 bzw. den Gehäuseinnenraums 15 kann in einer in der Umfangswand 26 ausgebildeten Vertiefung 31 ein Dichtungselement 32, etwa in der Art eines Dichtungsrings, angeordnet sein.

Der Hohlraum 21 kann in einer Weiterbildung über den Durchbruch 24 mit einem in den Figuren nicht näher dargestellten Fluidreservoir verbunden sein, in welchem ein Vorrat des Fluids bzw. Gases gespeichert ist. In diesem Fluidreservoir kann eine Druckbeaufschlagungseinrichtung, vorzugsweise in der Art eines Druckkolbens, vorhanden sein. Mittels diesem kann das Fluid, insbesondere das Gas, aus dem Fluidreservoir in den Hohlraum 21 eingebracht werden. Je nach Menge an Fluid, die durch Druckbeaufschlagung in den Hohlraum 21 eingebracht wird, kann der von der thermischen Isolierung erzeugte thermische Isolationsgrad variiert werden. Unabhängig von der Menge hängt der erzielte thermische Isolationsgrad auch von der Wärmeleitfähigkeit des gewählten Fluids ab.

Die Figur 4 zeigt eine Variante des Beispiels der Figur 2. Im Beispiel der Figur 4 ist auf der dem Strömungskanal 18 zugewandten Seite 19 des Lagergehäuses 14 ein Lagergehäusedeckel 23 ausgebildet. Zusammen mit dem Lagergehäuse 14 begrenzt der Lagergehäusedeckel 23 den die thermische Isolation 17 ausbildenden Hohlraum 21. Im Gegensatz zum Beispiel der Figur 2 ist zur Ausbildung des Hohlraums 21 im Beispiel der Figur 4 auf der Seite 19 des Lagergehäuses 14 keine Ausnehmung 22 ausgebildet. Vielmehr ist die Seite 19 des Lagergehäuses 14 im Wesentlichen eben realisiert. Stattdessen ist im Lagergehäusedeckel 23 eine Vertiefung 27 vorhanden, welche den Hohlraum 21 bildet, durch welche wiederum die thermische Isolation 17 realisiert ist. Der Lagergehäusedeckel 23 gemäß Figur 4 kann als Gussteil, insbesondere als Kunststoff-Gussteil, realisiert sein. Im Beispiel der Figur 4 ist der Lagergehäusedeckel 23 axial zwischen dem Verdichtergehäuse 16 und im Lagergehäuse 14 verspannt und auf diese Weise sicher am zweiten Abgasturbolader 10b fixiert.

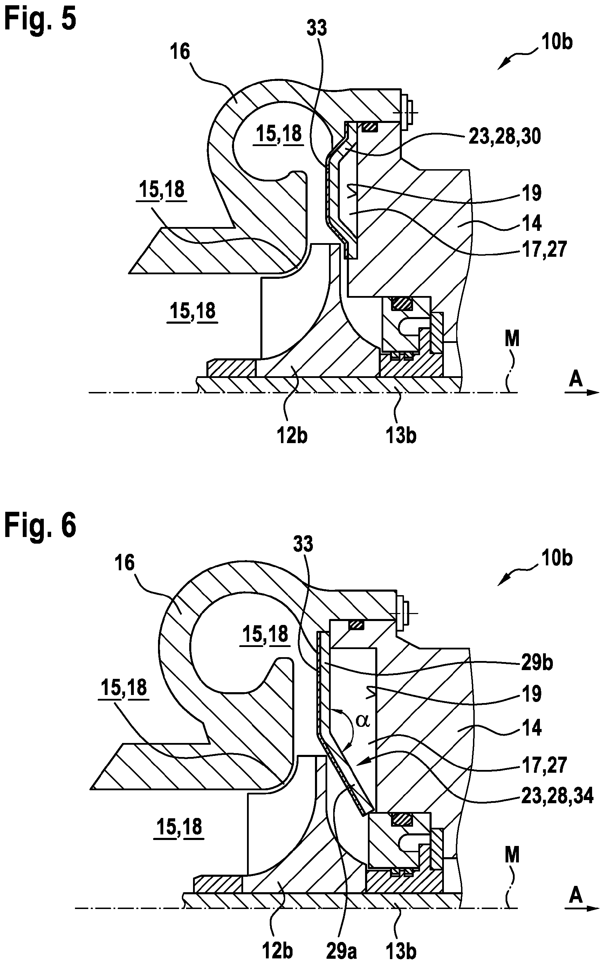

Im Beispiel der Figur 5, welche eine Variante des Beispiels der Figur 4 zeigt, ist der Lagergehäusedeckel 23 als tiefgezogenes Blechformteil 28 ausgebildet. Entsprechend Figur 5 kann das Blechformteil 28 axial zwischen dem Verdichtergehäuse 16 und im Lagergehäuse 14 verspannt sein.

Figur 6 zeigt eine Variante des Beispiels der Figur 5, bei welcher der Lagergehäusedeckel 23 als mittels Feinschneidens und Prägens gefertigtes Blechformteil 28 ausgebildet ist. In dem in Figur 6 gezeigten Längsschnitt entlang der axialen Richtung A besitzt das Blechformteil 28 einen radial inneren Abschnitt 29a, der von der zweiten Welle 13b weg in einen radial äußeren Abschnitt 29b übergeht. Der radial innere Abschnitt 29a und der radial äußere Abschnitt 29b sind unter einem stumpfen Winkel α zueinander angeordnet. Auf diese Weise wird, in analoger Weise zum Beispiel der Figur 5, eine Vertiefung 27 ausgebildet, die von der Seite 19 des Lagergehäuses 14 verschlossen ist. Auch im Beispiel der Figur 6 ist das Blechformteil 28 axial zwischen dem Verdichtergehäuse 16 und im Lagergehäuse 14 verspannt. Alternativ kann anstelle des Blechformteils 28 der Figuren 5 und 6 als Lagergehäusedeckel 23 auch ein Gussteil 34, vorzugsweise ein Kunststoff-Gussteil, mit derselben Geometrie wie das Blechformteil 28 verwendet werden.

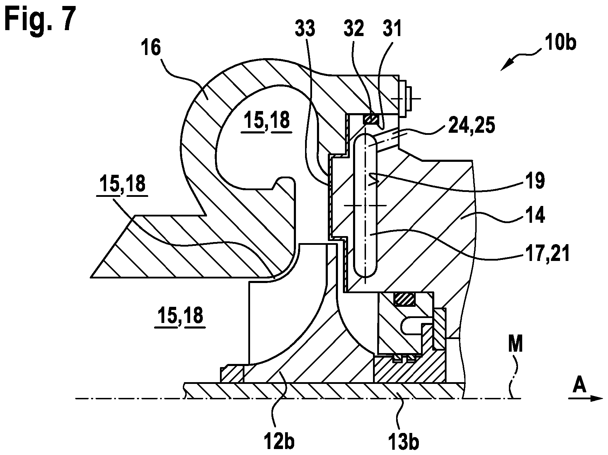

Die Figur 7 zeigt eine vereinfachte Variante des Beispiels der Figur 3. Im Beispiel der Figur 7 ist der die thermische Isolation 17 bildende Hohlraum 21 direkt im Lagergehäuse 14 ausgebildet. In analoger Weise zum Beispiel der Figur 3 kann auch direkt im Lagergehäuse 14 ein Durchbruch 24 bzw. eine Durchgangsbohrung 25 ausgebildet sein, mittels welchem der Hohlraums 21 von außen mit einem Fluid befüllt werden kann. Der Durchbruch 24 kann mittels eines geeigneten Verschlusselements (nicht gezeigt) verschlossen werden. Denkbar ist auch ein Verschluss durch das Verdichtergehäuse 16 (nicht gezeigt).

Der anhand der Figuren 1 bis 7 erläuterte Hohlraum 21 kann grundsätzlich mit einem Fluid, vorzugsweise mit einem Gas, höchst vorzugsweise mit Luft, befüllt sein, welches bevorzugt eine geringe Wärmeleitfähigkeit aufweist. Alternativ dazu kann in dem Hohlraum ein Vakuum ausgebildet sein. Auf diese Weise kann die Konvektion von Wärme vom Lagergehäuse 14 in das Verdichtergehäuse 16 reduziert werden. Auch im Beispiel der Figur 7 kann in analoger Weise zum Beispiel der Figur 3 ein Fluidreservoir vorgesehen werden.

In einer vorteilhaften Weiterbildung, die mit allen vorangehend genannten Beispielen kombiniert werden kann, kann zur Ausbildung einer zusätzlichen thermischen Isolation auch im Turbinengehäuse (nicht gezeigt) des zweiten Abgasturboladers 10b ein Hohlraum ausgebildet sein, der als thermische Isolation oder zumindest als Wärmedrossel wirkt.

In den Beispielen der Figuren 1 bis 7 kann auf der dem Strömungskanal 18 zugewandten Seite des Lagergehäuses 14 oder des Zwischenbauteils 20 oder des Lagergehäusedeckels 23 zusätzlich eine thermische Isolationsschicht 33 aufgebracht sein, die in den Figuren nur grobschematisch angedeutet ist. Das Material der thermischen Isolationsschicht 33 kann einen Kunststoff, vorzugsweise eine Keramik, umfassen bzw. ein Kunststoff, vorzugsweise eine Keramik, sein. Zweckmäßig kann das Material der thermischen Isolationsschicht 33 ein poröses Material, vorzugsweise einen Schaumstoff, umfassen oder ein poröses Material, vorzugsweise ein Schaumstoff sein; aber auch andere, zur Beschichtung geeignete Materialien mit geringer Wärmeleitfähigkeit kommen in Betracht. Alternativ dazu kann die thermische Isolationsschicht 33 eine, vorzugsweise metallisierte, Folie oder eine andersartig ausgebildete Verspiegelung sein, welche auf Wärmestrahlung reflektierend wirkt.

Auch der Lagergehäusedeckel 23 und/oder das Zwischenbauteil 20 können aus einem porösen Metall oder einem porösen Kunststoff hergestellt sein.

## Patentansprüche

1. Brennkraftmaschine (1),
- mit einer Frischluftseite (3) und einer Abgasseite (4),
- mit einer mit der Frischluftseite (3) kommunizierenden Frischluftleitung (5) und mit einer mit der Abgasseite (4) kommunizierenden Abgasleitung (6),
- mit einem ersten Abgasturbolader (10a), der ein erstes Turbinenrad (11a) und ein über eine erste Welle (13a) drehfest mit diesem verbundenes, erstes Verdichterrad (12a) aufweist,
wobei das erste Turbinenrad (11a) in der Abgasleitung (6) und das erste Verdichterrad (12a) in der Frischluftleitung (5) angeordnet sind,
- mit einem zweiten Abgasturbolader (10b), der ein zweites Turbinenrad (11b) und ein über eine zweite Welle (12b) drehfest mit diesem verbundenes zweites Verdichterrad (12b) aufweist,
- wobei das zweite Turbinenrad (11b) in der Abgasleitung (6) zwischen der Abgasseite (4) und dem ersten Turbinenrad (11a) und das zweite Verdichterrad (12b) in der Frischluftleitung (5) zwischen der Frischluftseite (3) und dem ersten Verdichterrad (12a) angeordnet ist,
- wobei das zweite Verdichterrad (12b) in einem Gehäuseinnenraum (15) angeordnet ist, der von einem Verdichtergehäuse (16) des zweiten Abgasturboladers (10b) teilweise begrenzt ist und wobei die zweite Welle (13b) drehbar an einem Lagergehäuse (14) des zweiten Abgasturboladers (10b) gelagert ist,
- wobei durch das Verdichtergehäuse (16), das zweite Verdichterrad (12b) und das Lagergehäuse (14) des zweiten Abgasturboladers (10b) ein Strömungskanal (18) für die durch die Frischluftleitung (5) geführte Frischluft begrenzt ist,
**dadurch gekennzeichnet, dass**
- zwischen dem Lagergehäuse (14) und dem Verdichtergehäuse (16) des zweiten Abgasturboladers (10b) eine thermische Isolation (17) zum Verringern eines Wärmetransports vom Lagergehäuse (14) zum Verdichtergehäuse (16) vorgesehen ist, wobei die thermische Isolation (17) auf einer dem Strömungskanal (18) zugewandten Seite des Lagergehäuses (14) ausgebildet ist,
- im ersten Abgasturbolader (10a) zwischen dessen Verdichtergehäuse und dessen Lagergehäuse keine thermische Isolation vorgesehen ist.

2. Brennkraftmaschine nach Anspruch 1,
**dadurch gekennzeichnet, dass**
die thermische Isolation (17) derart ausgebildet ist, dass ihr thermischer Isolationsgrad variierbar ist.

3. Brennkraftmaschine nach Anspruch 1 oder 2,
**dadurch gekennzeichnet, dass**
auf einer dem Strömungskanal (18) zugewandten Seite (19) des Lagergehäuses (14) ein, vorzugsweise ringartig ausgebildetes, Zwischenbauteil (20), vorzugsweise aus einem Metall oder einem Kunststoff, angeordnet ist, in welchem ein die thermische Isolation (17) ausbildender Hohlraum (21) vorhanden ist.

4. Brennkraftmaschine nach Anspruch 3,
**dadurch gekennzeichnet, dass**
das Zwischenbauteil (20) einen Durchbruch (24) zum Befüllen des Hohlraums (21) mit einem Fluid aufweist, der in einem im zweiten Abgasturbolader (10b) montierten Zustand vom Verdichtergehäuse (16) verschlossen ist.

5. Brennkraftmaschine nach Anspruch 3 oder 4,
**dadurch gekennzeichnet, dass**
das Zwischenbauteil (20) zwischen dem Lagergehäuse (14) und dem Verdichtergehäuse (16) verspannt ist.

6. Brennkraftmaschine nach einem der Ansprüche 3 bis 5,
**dadurch gekennzeichnet, dass**
das Zwischenbauteil (20) ein Aluminium-Gussteil ist.

7. Brennkraftmaschine nach einem der vorhergehenden Ansprüche,
**dadurch gekennzeichnet, dass**
auf einer dem Strömungskanal (18) zugewandten Seite (19) des Lagergehäuses (14) ein Lagergehäusedeckel (23) angeordnet ist, in welchem zur Ausbildung der thermischen Isolation (17) eine Vertiefung (27) ausgebildet ist,
- die Vertiefung (27) in einem am Lagergehäuse (14) angeordneten Zustand des Lagergehäusedeckels (23) vom Lagergehäuse (14) verschlossen ist.

8. Brennkraftmaschine nach Anspruch 7,
**dadurch gekennzeichnet, dass**
der Lagergehäusedeckel (23) zwischen dem Verdichtergehäuse (16) und dem Lagergehäuse (14) verspannt ist.

9. Brennkraftmaschine nach Anspruch 7 oder 8,
**dadurch gekennzeichnet, dass**
der Lagergehäusedeckel (23) als tiefgezogenes Blechformteil (28) oder als mittels Feinschneidens und Prägens gefertigtes Blechformteil (28) ausgebildet ist.

10. Brennkraftmaschine nach einem der Ansprüche 7 bis 9,
**dadurch gekennzeichnet, dass**
der Lagergehäusedeckel (23) als Gussteil, vorzugsweise aus einem Kunststoff, ausgebildet ist.

11. Brennkraftmaschine nach einem der vorhergehenden Ansprüche,
**dadurch gekennzeichnet, dass**
auf einer dem Strömungskanal (18) zugewandten Seite (19) des Lagergehäuses eine die thermische Isolation (17) ausbildende Ausnehmung (22) vorhanden ist, welche von einem Lagergehäusedeckel (23) verschlossen ist.

12. Brennkraftmaschine nach Anspruch 11,
**dadurch gekennzeichnet, dass**
der Lagergehäusedeckel (23), vorzugsweise aus einem Kunststoff, mittels einer Schraubverbindung (30) lösbar mit dem Lagergehäuse (14) verbunden ist.

13. Brennkraftmaschine nach einem der vorhergehenden Ansprüche,
**dadurch gekennzeichnet, dass**
in dem Lagergehäuse (14) ein die thermische Isolierung (17) bildender Hohlraum (21) ausgebildet ist.

14. Brennkraftmaschine nach einem der Ansprüche 3 bis 13,
**dadurch gekennzeichnet, dass**
im Lagergehäuse (14) ein vom Verdichtergehäuse (16) verschließbarer Durchbruch (24) ausgebildet ist, mittels welchem der Hohlraum (21) von außen mit einem Fluid, insbesondere mit einem Gas, befüllbar oder befüllt ist.

15. Brennkraftmaschine nach einem der Ansprüche 3 bis 14,
**dadurch gekennzeichnet, dass**
in dem Hohlraum (21) ein Vakuum ausgebildet ist.

16. Brennkraftmaschine nach einem der Ansprüche 3 bis 15,
**dadurch gekennzeichnet, dass**
- der Hohlraum (21) über den Durchbruch (24) mit einem Fluidreservoir verbindbar oder verbunden ist,
- im Fluidreservoir eine Druckbeaufschlagungseinrichtung, insbesondere ein Druckkolben, vorhanden ist, mittels welcher das Fluid, insbesondere das Gas, aus dem Fluidreservoir in den Hohlraum einbringbar ist.

17. Brennkraftmaschine nach einem der Ansprüche 3 bis 16,
**dadurch gekennzeichnet, dass**
in einem Turbinengehäuse des zweiten Abgasturboladers (10b) zum Verringern des Wärmeeintrags vom Turbinengehäuse zum Lagergehäuse (14) ein weiterer Hohlraum ausgebildet ist.

## Claims

1. Combustion engine (1),
- with a fresh air side (3) and an exhaust gas side (4),
- with a fresh air line (5) communicating with the fresh air side (3) and with an exhaust gas line (6) communicating with the exhaust gas side (4)
- with a first exhaust gas turbocharger (10a) which has a first turbine wheel (11a) and a first compressor wheel (12a) which is connected thereto in a rotationally fixed manner via a first shaft (13a),
wherein the first turbine wheel (11a) is arranged in the exhaust gas line (6) and the first compressor wheel (12a) in the fresh air line (5),
- with a second exhaust gas turbocharger (10b), which has a second turbine wheel (11b) and a second compressor wheel (12b) connected thereto in a rotationally fixed manner via a second shaft (12b),
- wherein the second turbine wheel (11b) is arranged in the exhaust gas line (6) between the exhaust gas side (4) and the first turbine wheel (11a) and the second compressor wheel (12b) is arranged in the fresh air line (5) between the fresh air side (3) and the first compressor wheel (12a),
- wherein the second compressor wheel (12b) is arranged in a housing interior (15) which is partially delimited by a compressor housing (16) of the second exhaust gas turbocharger (10b), and wherein the second shaft (13b) is rotatably mounted on a bearing housing (14) of the second exhaust gas turbocharger (10b),
- wherein a flow channel (18) for the fresh air conducted through the fresh air line (5) is delimited by the compressor housing (16), the second compressor wheel (12b) and the bearing housing (14) of the second exhaust gas turbocharger (10b) **characterised in that**
- thermal insulation (17) is provided between the bearing housing (14) and the compressor housing (16) of the second exhaust gas turbocharger (10b) to reduce heat transfer from the bearing housing (14) to the compressor housing (16), the thermal insulation (17) being formed on a side of the bearing housing (14) facing the flow channel (18),
- in the first exhaust gas turbocharger (10a), no thermal insulation is provided between its compressor housing and its bearing housing.

2. Combustion engine according to claim 1,
**characterised in that**
the thermal insulation (17) is designed in such a way that its degree of thermal insulation can be varied.

3. Combustion engine according to claim 1 or 2,
**characterised in that**
on a side (19) of the bearing housing (14) facing the flow channel (18) there is arranged an intermediate component (20), preferably of annular design, preferably made of a metal or a plastics material, in which a cavity (21) forming the thermal insulation (17) is present.

4. Combustion engine according to claim 3,
**characterised in that**
the intermediate component (20) has an opening (24) for filling the cavity (21) with a fluid, which is closed by the compressor housing (16) when it is installed in the second exhaust gas turbocharger (10b).

5. Combustion engine according to claim 3 or 4,
**characterised in that**
the intermediate component (20) is braced between the bearing housing (14) and the compressor housing (16).

6. Combustion engine according to any one of claims 3 to 5,
**characterised in that**
the intermediate component (20) is an aluminium casting.

7. Combustion engine according to any one of the preceding claims,
**characterised in that**
on a side (19) of the bearing housing (14) facing the flow channel (18) there is arranged a bearing housing cover (23) in which a recess (27) is formed to form the thermal insulation (17),
- the recess (27) is closed by the bearing housing (14) when the bearing housing cover (23) is arranged on the bearing housing (14).

8. Combustion engine according to claim 7,
**characterised in that**
the bearing housing cover (23) is braced between the compressor housing (16) and the bearing housing (14).

9. Combustion engine according to claim 7 or 8,
**characterised in that**
the bearing housing cover (23) is designed as a deep-drawn sheet metal part (28) or as a sheet metal part (28) produced by means of fine blanking and stamping.

10. Combustion engine according to any one of claims 7 to 9,
**characterised in that**
the bearing housing cover (23) is designed as a cast part, preferably made of a plastics material.

11. Combustion engine according to any one of the preceding claims,
**characterised in that**
on a side (19) of the bearing housing facing the flow channel (18) there is a recess (22) forming the thermal insulation (17), which is closed by a bearing housing cover (23).

12. Combustion engine according to claim 11,
**characterised in that**
the bearing housing cover (23), preferably made of a plastics material, is detachably connected to the bearing housing (14) by means of a screw connection (30).

13. Combustion engine according to any one of the preceding claims,
**characterised in that**
a cavity (21) forming the thermal insulation (17) is formed in the bearing housing (14).

14. Combustion engine according to any one of claims 3 to 13,
**characterised in that**
an opening (24) is formed in the bearing housing (14) which can be closed by the compressor housing (16) and by means of which the cavity (21) can be filled or is filled from the outside with a fluid, in particular with a gas.

15. Combustion engine according to any one of claims 3 to 14,
**characterised in that**
a vacuum is formed in the cavity (21).

16. Combustion engine according to any one of claims 3 to 15,
**characterised in that**
- the cavity (21) can be connected or is connected to a fluid reservoir via the opening (24),
- in the fluid reservoir there is a pressurising device, in particular a pressure piston, by means of which the fluid, in particular the gas, can be introduced from the fluid reservoir into the cavity.

17. Combustion engine according to one of claims 3 to 16,
**characterised in that**
a further cavity is formed in a turbine housing of the second exhaust gas turbocharger (10b) to reduce the heat input from the turbine housing to the bearing housing (14).

## Revendications

1. Moteur à combustion interne (1),
- avec un côté d'air frais (3) et un côté de gaz d'échappement (4),
- avec une conduite d'air frais (5) communiquant avec le côté d'air frais (3) et avec une conduite de gaz d'échappement (6) communiquant avec le côté de gaz d'échappement (4),
- avec un premier turbocompresseur (10a) qui présente une première roue de turbine (11a) et une première roue de compresseur (12a) reliée sans pouvoir tourner par le biais d'un premier arbre (13a) à celle-ci,
dans lequel la première roue de turbine (11a) est agencée dans la conduite de gaz d'échappement (6) et la première roue de compresseur (12a) est agencée dans la conduite d'air frais (5),
- avec un second turbocompresseur (10b) qui présente une seconde roue de turbine (11b) et une seconde roue de compresseur (12b) reliée sans pouvoir tourner par le biais d'un second arbre (12b) à celle-ci,
- dans lequel la seconde roue de turbine (11b) est agencée dans la conduite de gaz d'échappement (6) entre le côté de gaz d'échappement (4) et la première roue de turbine (11a) et la seconde roue de compresseur (12b) est agencée dans la conduite d'air frais (5) entre le côté d'air frais (3) et la première roue de compresseur (12a),
- dans lequel la seconde roue de compresseur (12b) est agencée dans un espace intérieur de boîtier (15) qui est délimité partiellement par un boîtier de compresseur (16) du second turbocompresseur (10b) et dans lequel le second arbre (13b) est logé de manière à pouvoir tourner au niveau d'un boîtier de palier (14) du second turbocompresseur (10b),
- dans lequel un canal d'écoulement (18) est délimité pour l'air frais guidé à travers la conduite d'air frais (5) par le boîtier de compresseur (16), la seconde roue de compresseur (12b) et le boîtier de palier (14) du second turbocompresseur (10b), **caractérisé en ce que**
- une isolation thermique (17) est prévue entre le boîtier de palier (14) et le boîtier de compresseur (16) du second turbocompresseur (10b) pour la diminution d'un transport de chaleur du boîtier de palier (14) au boîtier de compresseur (16), dans lequel l'isolation thermique (17) est réalisée sur un côté tourné vers le canal d'écoulement (18) du boîtier de palier (14),
- aucune isolation thermique n'est prévue dans le premier turbocompresseur (10a) entre son boîtier de compresseur et son boîtier de palier.

2. Moteur à combustion interne selon la revendication 1,
**caractérisé en ce que**
l'isolation thermique (17) est réalisée de telle manière que son degré d'isolation thermique soit variable.

3. Moteur à combustion interne selon la revendication 1 ou 2,
**caractérisé en ce que**
un composant intermédiaire (20) réalisé de préférence comme un anneau, de préférence en un métal ou une matière plastique, est agencé sur un côté (19) tourné vers le canal d'écoulement (18) du boîtier de palier (14), dans lequel un espace creux (21) réalisant l'isolation thermique (17) est présent.

4. Moteur à combustion interne selon la revendication 3,
**caractérisé en ce que**
le composant intermédiaire (20) présente une interruption (24) pour le remplissage de l'espace creux (21) avec un fluide qui est fermée dans un état monté dans le second turbocompresseur (10b) par le boîtier de compresseur (16).

5. Moteur à combustion interne selon la revendication 3 ou 4,
**caractérisé en ce que**
le composant intermédiaire (20) est tendu entre le boîtier de palier (14) et le boîtier de compresseur (16).

6. Moteur à combustion interne selon l'une des revendications 3 à 5,
**caractérisé en ce que**
le composant intermédiaire (20) est une partie moulée en aluminium.

7. Moteur à combustion interne selon l'une des revendications précédentes,
**caractérisé en ce que**
un couvercle de boîtier de palier (23) est agencé sur un côté (19) tourné vers le canal d'écoulement (18) du boîtier de palier (14), dans lequel une cavité (27) est réalisée pour la réalisation de l'isolation thermique (17),
- la cavité (27) est fermée dans un état agencé au niveau du boîtier de palier (14) du couvercle de boîtier de palier (23) par le boîtier de palier (14).

8. Moteur à combustion interne selon la revendication 7,
**caractérisé en ce que**
le couvercle de boîtier de palier (23) est tendu entre le boîtier de compresseur (16) et le boîtier de palier (14).

9. Moteur à combustion interne selon la revendication 7 ou 8,
**caractérisé en ce que**
le couvercle de boîtier de palier (23) est réalisé comme partie formée en tôle (28) emboutie ou comme partie formée en tôle (28) fabriquée par découpage fin et estampage.

10. Moteur à combustion interne selon l'une des revendications 7 à 9,
**caractérisé en ce que**
le couvercle de boîtier de palier (23) est réalisé comme partie moulée, de préférence en une matière plastique.

11. Moteur à combustion interne selon l'une des revendications précédentes,
**caractérisé en ce que**
un évidement (22) réalisant l'isolation thermique (17) est présent sur un côté (19) tourné vers le canal d'écoulement (18) du boîtier de palier, lequel est fermé par un couvercle de boîtier de palier (23).

12. Moteur à combustion interne selon la revendication 11,
**caractérisé en ce que**
le couvercle de boîtier de palier (23), de préférence en une matière plastique, est relié de manière détachable au moyen d'une liaison vissée (30) au boîtier de palier (14).

13. Moteur à combustion interne selon l'une des revendications précédentes,
**caractérisé en ce que**
un espace creux (21) formant l'isolation thermique (17) est réalisé dans le boîtier de palier (14).

14. Moteur à combustion interne selon l'une des revendications 3 à 13,
**caractérisé en ce que**
une interruption (24) refermable par le boîtier de compresseur (16) est réalisée dans le boîtier de palier (14), au moyen de laquelle l'espace creux (21) est ou peut être rempli de l'extérieur avec un fluide, en particulier avec un gaz.

15. Moteur à combustion interne selon l'une des revendications 3 à 14,
**caractérisé en ce que**
un vide est réalisé dans l'espace creux (21).

16. Moteur à combustion interne selon l'une des revendications 3 à 15,
**caractérisé en ce que**
- l'espace creux (21) est ou peut être relié par le biais de l'interruption (24) à un réservoir de fluide,
- un dispositif d'alimentation en pression, en particulier un piston de pression, est présent dans le réservoir de fluide, au moyen duquel le fluide, en particulier le gaz, peut être introduit du réservoir de fluide dans l'espace creux.

17. Moteur à combustion interne selon l'une des revendications 3 à 16,
**caractérisé en ce que**
un autre espace creux est réalisé dans un boîtier de turbine du second turbocompresseur (10b) pour la diminution de l'apport de chaleur du boîtier de turbine au boîtier de palier (14).
